# EUROPÄISCHE PATENTANMELDUNG

(11) **EP 4 523 867 A1**
(43) Veröffentlichungstag der Anmeldung: **19.03.2025**
(21) Anmeldenummer: 24200790.4
(22) Anmeldetag: 17.09.2024
(51) Int. Cl.: B25J 15/04, B25J 17/02, B25J 19/06

(54) **AUSGLEICHSELEMENT**

(30) Priorität: 18.09.2023 DE 102023125162
(71) Anmelder: KRONES AG, 93073 Neutraubling (DE)
(72) Erfinder: SCHERL, Stefan, 93073 Neutraubling (DE); EHRISMANN, Tobias, 93073 Neutraubling (DE)
(74) Vertreter: v. Bezold & Partner Patentanwälte - PartG mbB

(57) **Zusammenfassung**

Die Erfindung betrifft u.a. eine Vorrichtung (10A-10D) zum Verbinden eines Greifers (42) mit einer Handhabungseinrichtung. Die Vorrichtung (10A-10D) weist mindestens ein Ausgleichselement (12A-12D) zum Ausgleichen von Positionsungenauigkeiten auf, mit einer Werkzeugaufnahme (14) zum Aufnehmen des Greifers (42), einem Rahmen (18) zum Verbinden des Ausgleichselements (12A-12D) mit der Handhabungseinrichtung und mehreren elastisch verformbaren Verbindern (22), die die Werkzeugaufnahme (14) elastisch bewegbar innerhalb des Rahmens (18) mit dem Rahmen (18) verbinden. Die Werkzeugaufnahme (14), der Rahmen (18) und die mehreren Verbinder (22) sind integral-einstückig miteinander verbunden.

## Beschreibung

### Technisches Gebiet

Die Erfindung betrifft eine Vorrichtung zum Verbinden eines Greifers mit einer Handhabungseinrichtung, wobei die Vorrichtung mindestens ein Ausgleichselement zum Ausgleichen von Positionsungenauigkeiten aufweist. Die Erfindung betrifft ferner eine Behälterbehandlungsanlage, ein Verfahren zum Herstellen der Vorrichtung und ein Computerprogrammprodukt.

### Technischer Hintergrund

Ein sogenanntes Ausgleichselement kann bspw. zwischen einem Roboter und dessen Greifwerkzeug verbaut sein, um Positionsungenauigkeiten des zu greifenden Werkstücks, des Roboters, des Greifers oder andere Störeinflüsse ausgleichen zu können.

Herkömmlich kann ein solches Ausgleichselement aus vielen Bauteilen aufgebaut sein. Beispielsweise kann aus mehreren Bauteilen ein Gehäuse gebildet sein, in dessen Inneren ein Ausgleichskörper über elastische Verbindungselemente (wie z. B. Elastomere oder Federn) verschieblich gelagert ist. Diese Verschiebung kann in X- und Y-Richtung oder aber auch in X-, Y- und Z-Richtung ermöglicht werden. In letzterem Fall kann dann bspw. die Einbettung in ein weiteres elastisches Verbindungselement erforderlich sein, welches eine Bewegung in Z-Richtung zulässt.

Nachteilig am bekannten Stand der Technik kann das durch die große Anzahl an Bauteilen (meist aus Metall) verhältnismäßig hohe Gewicht des Ausgleichselements sein. Dies ist insbesondere dann nachteilig, wenn das zu greifende Bauteil sehr leicht ist. Dann ist die Masse des Ausgleichselements in derselben Größenordnung oder sogar noch größer als die des zu greifenden Bauteils. Das hohe Gewicht des Ausgleichselements kann damit ein einschränkender Faktor bei der Dynamik der Handhabungsbewegung sein. Zudem kann aufgrund der Vielzahl an Bauteilen auch die Komplexität sehr hoch und damit die Montage des Ausgleichselements sehr aufwendig sein. Insbesondere bei weniger anspruchsvollen Greifoperationen mit z. B. geringen Massen oder nicht extrem hohen Anforderungen an die Genauigkeit ist ein herkömmliches System nach dem Stand der Technik schnell überdimensioniert.

Der Erfindung liegt die Aufgabe zu Grunde, eine verbesserte Technik zum Ausgleichen von Positionsungenauigkeiten beim Handhaben von Gegenständen zu schaffen, mit der vorzugsweise zumindest einige der vorstehend genannten Nachteile überwunden werden können.

### Zusammenfassung der Erfindung

Die Aufgabe wird gelöst durch die Merkmale der unabhängigen Ansprüche. Vorteilhafte Weiterbildungen sind in den abhängigen Ansprüchen und der Beschreibung angegeben.

Ein Aspekt der vorliegenden Offenbarung betrifft eine Vorrichtung zum Verbinden eines Greifers mit einer Handhabungseinrichtung, vorzugsweise Handhabungsroboter. Die Vorrichtung weist mindestens ein, vorzugsweise im Wesentlichen scheibenförmiges, Ausgleichselement zum Ausgleichen von Positionsungenauigkeiten (z. B. eines zu greifenden Gegenstands, der Handhabungseinrichtung und/oder des Greifers) auf. Das mindestens eine Ausgleichselement weist (jeweils) auf:
- eine, vorzugsweise (z. B. kreis-) ringförmige oder (z. B. rund-) rohrförmige, Werkzeugaufnahme zum Aufnehmen eines Greifers,
- einen, vorzugsweise (z. B. kreis-) ringförmigen, Rahmen zum Verbinden des Ausgleichselements mit der Handhabungseinrichtung, wobei der Rahmen die Werkzeugaufnahme rahmenförmig, und vorzugsweise koaxial, umgibt, und
- mehrere elastisch verformbare (z. B. elastisch biegsame) Verbinder, die die Werkzeugaufnahme elastisch bewegbar innerhalb des Rahmens mit dem Rahmen verbinden.

Die Werkzeugaufnahme, der Rahmen und die mehreren Verbinder sind integral-einstückig miteinander verbunden.

Vorteilhaft ermöglicht die Vorrichtung, dass die Funktionen eines komplexen Ausgleichselements in nur einem einzigen einstückigen Bauteil integriert werden können. Das Ausgleichselement kann dadurch vorzugsweise deutlich leichter sein als herkömmliche Konstruktionen, wodurch höhere Dynamiken bei der Handhabungsanwendung ermöglicht werden können. Durch die deutlich reduzierte Komplexität können zudem vorteilhaft die Kosten deutlich verringert und damit der Einsatz deutlich wirtschaftlicher sein. Vorteilhaft kann die Konstruktion des Ausgleichselements zudem prinzipiell für sehr viele unterschiedliche Handhabungsanwendungen, wie Greifanwendungen, genutzt werden.

In einem Ausführungsbeispiel ist das mindestens eine Ausgleichselement aus mehreren aneinander angrenzenden, vorzugsweise additiv gefertigten, Materialschichten gebildet, vorzugsweise aus einem Kunststoff, z. B. einem thermoplastischen Polyurethan, Polyamid, bspw. PA12, PA6; oder weiteren üblichen Materialien. Vorteilhaft kann damit eine besonders einfache und schnelle Herstellung des Ausgleichselements selbst bei einer Stückzahl von eins ermöglicht werden, ohne dass hierfür spezielle Fertigungswerkzeuge angefertigt werden müssten. Vorteilhaft ist zudem, dass eine Adaptierung des Ausgleichselements, z. B. bezüglich der gewünschten Rückstellkräfte auf die anwendungsindividuelle Beanspruchung usw., besonders einfach umgesetzt werden kann.

In einem weiteren Ausführungsbeispiel sind die Verbinder als Stege (Speichen) ausgeführt. Optional können sich die Stege gebogen, bevorzugt spiralförmig gebogen, zwischen dem Rahmen und der Werkzeugaufnahme erstrecken. Vorteilhaft können die Stege eine einfache und zuverlässige Ausführung der Verbinder ermöglichen. Vorteilhaft kann die gebogene Form der Stege vergleichsweise lange Stege ermöglichen, mit denen eine gewünschte elastische Bewegbarkeit und Rückstellkraft sehr genau wie gewünscht vorgesehen werden kann.

Alternativ können die Verbinder bspw. ringförmig, blasenförmig oder gewellt sein. Vorteilhaft können die Verbinder somit vergleichsweise steif ausgeführt sein, um eine nicht zu große elastische Bewegbarkeit der Werkzeugaufnahme zu ermöglichen.

In einem weiteren Ausführungsbeispiel gehen die Verbinder jeweils einerseits (z. B. tangential) in eine Außenumfangsfläche der Werkzeugaufnahme und andererseits (z. B. tangential) in eine Innenumfangsfläche des Rahmens über. Vorteilhaft können damit sanfte Einfederbewegungen der Verbinder und eine verringerte Belastung an den Übergängen ermöglicht werden.

In einer Ausführungsform weist das mindestens eine Ausgleichselement mehrere, vorzugsweise zwei oder drei, Ausgleichselemente auf, die miteinander verbunden sind, vorzugsweise integral-einstückig. Vorteilhaft können damit mehrere Greifer und damit mehrere Handhabungsoperationen gleichzeitig vorgenommen werden. Hierbei können die bereits erläuterten Vorteile des geringen Gewichts, der geringen Komplexität usw. mehrfach genutzt werden, wodurch in einigen Anwendungsfällen die Nutzung mit mehreren Greifern an einer einzigen Handhabungseinrichtung überhaupt erst ermöglicht werden kann. Vorteilhaft können zudem mehrere Greifer in den Werkzeugaufnahmen aufgenommen werden und somit gleichzeitig mehrere Gegenstände, wie Behälterdrehteller, gegriffen werden, wobei individuelle Ungenauigkeiten der Position der Greifer und der Gegenstände durch die Ausgleichelemente ausgeglichen werden können. Vorteilhaft kann damit eine besonders zeitsparende Handhabung der Gegenstände ermöglicht werden.

Vorzugsweise können die mehreren Ausgleichselemente nebeneinander, vorzugsweise in einer Reihe nebeneinander, angeordnet sein. Alternativ oder zusätzlich können die mehreren Ausgleichselemente bspw. in einer gemeinsamen Ausrichtungsebene angeordnet sein.

In einer weiteren Ausführungsform weisen die Werkzeugaufnahmen der mehreren Ausgleichselemente jeweils einen Mittelpunkt auf, und die Mittelpunkte liegen auf einem gedachten Kreisbogen. Vorteilhaft kann die Anordnung der Mittelpunkte auf dem gedachten Kreisbogen an eine Rundläufer-Behälterbehandlungseinrichtung und deren Teilkreis angepasst sein. Vorzugsweise kann die Vorrichtung somit besonders effizient mit dieser Rundläufer-Behälterbehandlungseinrichtung verwendet werden.

In einer Ausführungsvariante weist die Vorrichtung ferner ein Gehäuse auf, das die mehreren Ausgleichselemente miteinander, vorzugsweise mittels mehrerer Streben, verbindet, wobei das Gehäuse optional einen Flanschabschnitt zum Anbringen der Vorrichtung an die Handhabungseinrichtung aufweist. Vorteilhaft können die mehreren Ausgleichselemente auf diese Weise zuverlässig zu einem einzigen Bauteil integriert werden.

In einer weiteren Ausführungsvariante ist das Gehäuse integral-einstückig mit den mehreren Ausgleichselementen verbunden, und/oder die mehreren Ausgleichselemente und das Gehäuse sind gemeinsam aus mehreren aneinander angrenzenden, vorzugsweise additiv gefertigten, Materialschichten gebildet, vorzugsweise aus einem Kunststoff, z. B. einem thermoplastischen Polyurethan, Polyamid, bspw. PA12, PA6; oder weiteren üblichen Materialien. Vorteilhaft kann damit eine besonders einfache und schnelle Herstellung der Ausgleichselemente und des Gehäuses selbst bei einer sehr geringen Stückzahl ermöglicht werden, ohne dass hierfür spezielle Fertigungswerkzeuge angefertigt werden müssten. Vorteilhaft ist zudem, dass eine anwendungsindividuelle Adaptierung des Gehäuses und der Ausgleichselemente besonders einfach umgesetzt werden kann.

In einem Ausführungsbeispiel weist die Vorrichtung ferner mindestens einen mechanischen Anschlag auf, der eine elastische Bewegbarkeit der Werkzeugaufnahme innerhalb des Rahmens begrenzt. Vorteilhaft können damit die Verbinder vor einer Überlastung und Bruch geschützt werden bzw. die Ausgleichsbewegungen limitiert werden, wodurch die Werkzeugaufnahme vor einer ungewünscht großen Verschiebung geschützt wird.

In einem weiteren Ausführungsbeispiel:
- ist der mindestens eine mechanische Anschlag lösbar oder integral-einstückig mit dem mindestens einen Ausgleichselement, vorzugsweise der Werkzeugaufnahme des mindestens einen Ausgleichselements, verbunden; und/oder
- ist der mindestens eine mechanische Anschlag mit der Werkzeugaufnahme zum Mitbewegen mit der Werkzeugaufnahme verbunden; und/oder
- umgreift der mindestens eine mechanische Anschlag den Rahmen mit einem Spalt zwischen dem mindestens einen mechanischen Anschlag und dem Rahmen (z. B. zum Bereitstellen eines Bewegungsraums für die Werkzeugaufnahme), und/oder
- ist der mindestens eine mechanische Anschlag als ein erhabener, vorzugsweise gebogener, Rand einer von der Werkzeugaufnahme ausgehenden Platte ausgeführt, der zum Begrenzen der elastischen Bewegbarkeit (z. B. außen) an den Rahmen anschlägt.

Vorteilhaft kann auf diese Weise eine besonders einfache und zuverlässige Konstruktion des mindestens einen mechanischen Anschlags bereitgestellt werden.

In einer Ausführungsvariante weist das mindestens eine Ausgleichselement ferner einen elastisch verformbaren Balg auf, der die Werkzeugaufnahme, vorzugsweise koaxial, umgibt und zum Rückstellen und/oder Arretieren der Werkzeugaufnahme aufblasbar ist. Vorteilhaft kann damit mittels pneumatischer Ansteuerung des Balgs eine Rückstellung der Werkzeugaufnahme in deren Mittellage und/oder eine Arretierung der Werkzeugaufnahme in deren Mittellage ermöglicht werden.

Optional können die Werkzeugaufnahme, der Rahmen, die mehreren Verbinder und der elastisch verformbare Balg integral-einstückig miteinander verbunden sein.

Optional kann der elastisch verformbare Balg einen (z. B. ringförmigen) Innenkonusabschnitt aufweisen, der einem (z. B. ringförmigen) Außenkonusabschnitt der Werkzeugaufnahme gegenüberliegt.

In einer weiteren Ausführungsvariante weist die Vorrichtung ferner mindestens einen Greifer, bevorzugt Lochgreifer oder Außengreifer (z. B. Parallelgreifer), auf, der in der Werkzeugaufnahme des mindestens einen Ausgleichselements, vorzugsweise lösbar oder integral-einstückig, aufgenommen ist.

In einem Ausführungsbeispiel weist die Vorrichtung ferner mehrere, vorzugsweise stabförmige, Abstandhalter zum ausgerichteten Positionieren eines von dem mindestens einen Greifer gehaltenen Gegenstands auf. Vorteilhaft kann damit ein ungewünschtes Verkippen oder Taumeln des gegriffenen Gegenstands beim Handhaben verhindert werden.

Ein weiterer Aspekt der vorliegenden Offenbarung betrifft eine Behälterbehandlungsanlage aufweisend eine Behälterbehandlungseinrichtung (z. B. Behälteretikettiereinrichtung), vorzugsweise eine Rundläufer-Behälterbehandlungseinrichtung (z. B. Rundläufer-Behälteretikettiereinrichtung). Die Behälterbehandlungsanlage weist ferner eine Handhabungseinrichtung mit einer Vorrichtung wie hierin offenbart auf, wobei die Handhabungseinrichtung zum Handhaben von Behältern oder Bauteilen, vorzugsweise Behälterdrehtellern, Formatteilen oder Garniturteilen, der Behälterbehandlungseinrichtung ausgebildet ist. Vorteilhaft können mit der Behälterbehandlungsanlage die gleichen Vorteile erzielt werden, die bereits unter Bezugnahme auf die Vorrichtung beschrieben wurden. Die Anwendung in einer Behälterbehandlungsanlage kann dabei besonders vorteilhaft sein, da die hierbei gestellten Anforderungen von dem Ausgleichselement trotz dessen einfachen Aufbaus voll erfüllt werden können.

Bevorzugt kann der gedachte Kreisbogen, auf dem die Mittelpunkte der Werkzeugaufnahmen liegen, ein Teil (eine Kreislinie) eines Kreises sein, dessen Durchmesser identisch zu einem Teilkreis der Rundläufer-Behälterbehandlungseinrichtung ist. Wie bereits erwähnt, kann damit die Vorrichtung vorteilhaft konstruktiv an eine Rundläufer-Behälterbehandlungseinrichtung und deren Teilkreis angepasst und damit besonders effizient mit dieser Rundläufer-Behälterbehandlungseinrichtung verwendet werden.

Beispielsweise kann die Behälterbehandlungsanlage zum Herstellen, Reinigen, Beschichten, Prüfen, Abfüllen, Verschließen, Etikettieren, Bedrucken und/oder Verpacken von Behältern für flüssige Medien, vorzugsweise Getränke oder flüssige Nahrungsmittel, ausgebildet sein.

Vorzugsweise können die Behälter als Flaschen, Dosen, Kanister, Kartons, Flakons, Tuben usw. ausgeführt sein.

Ein weiterer Aspekt der vorliegenden Offenbarung betrifft ein Verfahren zum Herstellen einer Vorrichtung wie hierin offenbart. Die Vorrichtung weist ein additives Fertigen des mindestens einen Ausgleichselements, und optional des Gehäuses, des mindestens einen mechanischen Anschlags und/oder des mindestens einen Greifers, zu einem einteiligen Körper, vorzugsweise in einem Pulverbettverfahren und/oder aus einem Kunststoff, bevorzugt einem thermoplastischen Polyurethan, Polyamid, bspw. PA12, PA6; oder weiteren üblichen Materialien, auf. Vorteilhaft können mit der Verfahren die gleichen Vorteile erzielt werden, die bereits unter Bezugnahme auf die Vorrichtung beschrieben wurden.

Ein weiterer Aspekt der vorliegenden Offenbarung betrifft ein Computerprogrammprodukt aufweisend Anweisungen, die eine additive Fertigungsvorrichtung veranlassen, eine Vorrichtung wie hierin offenbart in einer Vielzahl von Schichten in einem additiven Fertigungsverfahren, vorzugsweise Pulverbettverfahren, herzustellen, oder ein Verfahren wie hierin offenbart durchzuführen.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine perspektivische Ansicht einer Vorrichtung gemäß einem Ausführungsbeispiel der vorliegenden Offenbarung;
- Figur 2: eine Draufsicht auf die beispielhafte Vorrichtung von Figur 1;
- Figur 3: eine Schnittansicht durch die beispielhafte Vorrichtung von Figur 1;
- Figur 4: eine perspektivische Ansicht einer Vorrichtung gemäß einem Ausführungsbeispiel der vorliegenden Offenbarung;
- Figur 5: eine perspektivische Schnittansicht durch eine Vorrichtung gemäß einem Ausführungsbeispiel der vorliegenden Offenbarung;
- Figur 6: eine perspektivische Ansicht einer Vorrichtung gemäß einem Ausführungsbeispiel der vorliegenden Offenbarung;
- Figur 7: eine Draufsicht auf die beispielhafte Vorrichtung von Figur 6;
- Figur 8: eine perspektivische Ansicht der beispielhaften Vorrichtung von Figur 6, ausgestattet mit Werkzeugen;
- Figur 9: eine weitere perspektivische Ansicht der beispielhaften Vorrichtung von Figur 8;
- Figur 10: eine Schnittansicht durch die beispielhafte Vorrichtung von Figur 8; und

- Figur 11: eine perspektivische Ansicht der beispielhaften Vorrichtung von Figur 6, ausgestattet mit Werkzeugen.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

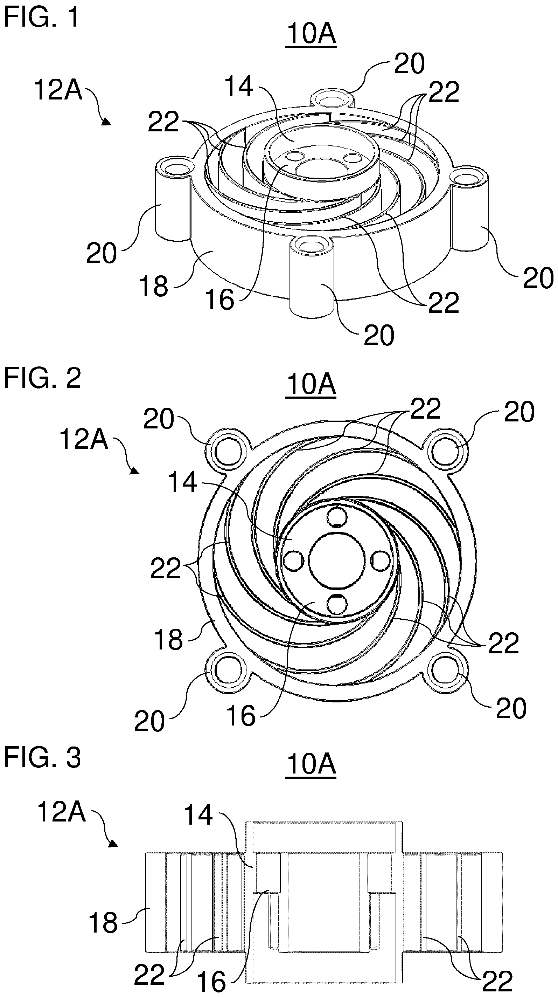

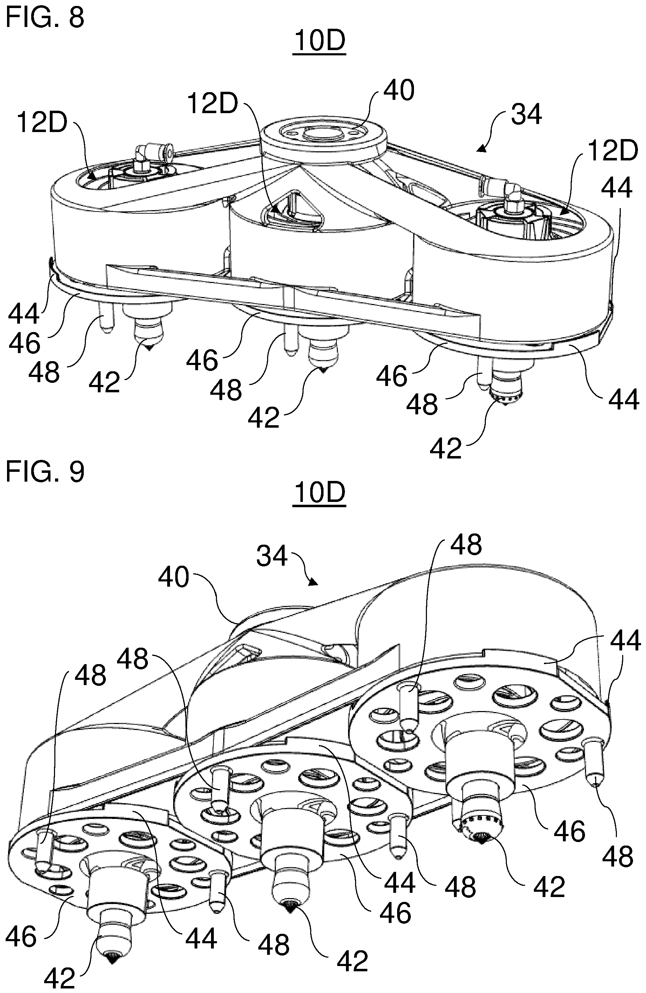

Die Figuren 1 bis 11 zeigen Vorrichtungen 10A-10D zum Verbinden mindestens eines Greifers 42 mit einer Handhabungseinrichtung zum Ausgleichen von Positionsungenauigkeiten. Der besseren Übersicht halber sind die Greifer 42 nur in den Figuren 8 bis 11 dargestellt.

Im Einzelnen weisen die Vorrichtungen 10A-10D jeweils mindestens ein, vorzugsweise scheibenförmiges, Ausgleichselement 12A-12D zum Ausgleichen der Positionsungenauigkeiten auf. Es ist möglich, dass die Vorrichtungen 10A-10D neben dem Ausgleichselement 12A-12D weitere Elemente aufweist, wie hierin beispielhaft unter Bezugnahme auf die Figuren 8ff. beschrieben ist.

Die Handhabungseinrichtung kann bspw. ein stationärer oder mobiler Roboter oder jegliche andere Art von Handhabungseinrichtung sein. Beispielsweise kann die Handhabungseinrichtungen einen verschwenkbaren und/oder verschiebbaren Arm aufweisen. Die Vorrichtung 10A-10D kann an dem Arm, z. B. an einem Ende des Arms, angebracht werden. Der mindestens eine Greifer 42 kann über die Vorrichtung 10A-10D an dem Arm angebracht und vorzugsweise getragen sein.

Vorzugsweise kann die jeweilige Vorrichtung 10A-10D zusammen mit dem mindestens einen Greifer 42 einen Endeffektor für die Handhabungseinrichtung bilden (siehe Figuren 8 bis 11).

Bevorzugt kann die jeweilige Vorrichtung 10A-10D zusammen mit der Handhabungseinrichtung in einer Behälterbehandlungsanlage verwendet werden. Beispielsweise kann die Vorrichtung 10A-10D bestückt mit mindestens einem Greifer 42 zum Greifen mindestens eines Behälterdrehtellers ausgeführt sein. Es ist auch möglich, dass der Greifer 42 bspw. zum Greifen von Behältern, Garniturteilen oder Formatteilen in einer Behälterbehandlungsanlage verwendet wird. Es ist ebenfalls möglich, dass die Vorrichtung 10A-10D in einer Umgebung, die sich von einer Behälterbehandlungsanlage unterscheidet, zum Ausgleichen von Positionsungenauigkeiten verwendet wird.

Besonders bevorzugt ist das mindestens eine Ausgleichselement 12A-12D aus mehreren aneinander angrenzenden, additiv gefertigten Materialschichten gebildet. Das mindestens eine Ausgleichselement 12A-12D kann zu einem einteiligen Körper additiv gefertigt werden. Vorzugsweise kann das mindestens eine Ausgleichselement 12A-12D in einem Pulverbettverfahren additiv gefertigt werden. Bevorzugt können die Materialschichten aus einem Kunststoff, vorzugsweise aus einem thermoplastischen Polyurethan, einem Polyamid oder weiteren üblichen Materialien, sein.

Anweisungen zum Veranlassen einer additiven Fertigungseinrichtung zum additiven Fertigen der des mindestens einen Ausgleichselements 12A-12D (bzw. der Vorrichtung 10A-10D) können in einem Computerprogrammprodukt (z. B. Datei(en) oder Datenträger mit Datei(en)) gespeichert sein.

Die Figuren 1 bis 3 zeigen die Vorrichtung 10A mit dem Ausgleichselement 12A.

Das Ausgleichselement 12A weist eine Werkzeugaufnahme 14, einen Rahmen 18 und mehrere Verbinder 22 auf.

Bevorzugt können die Werkzeugaufnahme 14, der Rahmen 18 und die Verbinder 22 in einer gemeinsamen Ebene bzw. Lage liegen. Gemeinsam können die Werkzeugaufnahme 14, der Rahmen 18 und die Verbinder 22 eine scheibenförmige Gestalt des Ausgleichselements 12A ergeben.

Die Werkzeugaufnahme 14, der Rahmen 18 und die Verbinder 22 sind integral-einstückig miteinander verbunden. Entsprechend kann das Ausgleichselement 12A einteilig sein. Die Werkzeugaufnahme 14, der Rahmen 18 und die Verbinder 22 können gemeinsam einen einteiligen Körper bilden. Im Einzelnen können die Werkzeugaufnahme 14, der Rahmen 18 und die Verbinder 22 gemeinsam aus mehreren aneinander angrenzenden, additiv gefertigten Materialschichten gebildet sein.

Die Werkzeugaufnahme 14 ist zum Aufnehmen eines Greifers ausgeführt. Beispielsweise kann der aus Gründen der besseren Übersichtlichkeit nicht in den Figuren 1 bis 3 (sowie 4 bis 7) dargestellte Greifer wie einer der in den Figuren 8 bis 11 dargestellten Greifer 42 ausgeführt sein.

Beispielsweise kann der Greifer direkt an der Werkzeugaufnahme 14 aufgenommen werden. Alternativ kann der Greifer bspw. mittelbar an der Werkzeugaufnahme 14 aufgenommen sein, z. B. mittels eines Adapters, eines Werkzeuggehäuses oder einer Werkzeughalterung.

Die Werkzeugaufnahme 14 ist vorzugsweise ringförmig oder rohrförmig (z. B. mit einer kreisförmigen Außenkontur). Die Werkzeugaufnahme 14 kann einen im Wesentlichen zylinderförmigen Aufnahmeraum für den Greifer aufweisen. Der Greifer kann in einem Inneren der Ringform aufgenommen sein. Beispielsweise kann der Greifer zentrisch in der Werkzeugaufnahme 14 aufgenommen sein.

Der Greifer kann lösbar an der Werkzeugaufnahme 14 angebracht werden. Beispielsweise kann der Greifer kraft- und/oder formschlüssig an der Werkzeugaufnahme 14 angebracht werden. Bevorzugt kann der Greifer mittels einer Rast-, Steck- oder Schraubverbindung an der Werkzeugaufnahme 14 angebracht sein.

Beispielsweise kann die Werkzeugaufnahme 14 einen Befestigungsabschnitt 16 zum Befestigen des Greifers aufweisen. Vorzugsweise kann der Befestigungsabschnitt 16 an einer Innenumfangsfläche der ringförmigen oder rohrförmig Werkzeugaufnahme 14 angeordnet sein.

Bevorzugt kann der Befestigungsabschnitt 16 beispielsweise eine ringförmige Stützplatte zum Abstützen des Greifers aufweisen.

Alternativ oder zusätzlich kann der Befestigungsabschnitt 16 beispielsweise mindestens ein Schraubenloch für eine Schraubenverbindung mit dem Greifer, mindestens ein Rastelement für eine Rastverbindung mit dem Greifer und/oder mindestens ein Steckelement für eine Steckverbindung mit dem Greifer aufweisen. Bevorzugt sind mehrere Schraubenlöcher, mehrere Rastelemente und/oder mehrere Steckelemente umfasst. Beispielsweise können die mehreren Schraubenlöcher, die mehreren Rastelemente und/oder die mehreren Steckelemente an einer Innenumfangsseite der ringförmigen Werkzeugaufnahme 14 angeordnet sein, vorzugsweise äquidistant zueinander.

Es ist möglich, dass die mehreren Schraubenlöcher, die mehreren Rastelemente und/oder die mehreren Steckelemente in oder an der ringförmigen Stützplatte des Befestigungsabschnitts 16 angeordnet sind.

Der Rahmen 18 dient zum Verbinden des Ausgleichselements 12A mit der Handhabungseinrichtung.

Der Rahmen 18 umgibt die Werkzeugaufnahme 14 rahmenförmig. Bevorzugt sind der Rahmen 18 und die Werkzeugaufnahme 14 koaxial angeordnet. Vorzugsweise ist der Rahmen 18 ringförmig.

Der Rahmen 18 kann beabstandet zu der Werkzeugaufnahme 14 angeordnet sein. Bevorzugt kann ein Ringspalt zwischen einer Innenumfangsfläche des Rahmens 18 und einer Außenumfangsfläche der Werkzeugaufnahme 14 angeordnet sein.

Bevorzugt kann der Rahmen 18 die Werkzeugaufnahme 14 über die Verbinder 22 tragen.

Der Rahmen 18 kann lösbar an der Handhabungseinrichtung angebracht werden. Beispielsweise kann der Rahmen 18 kraft- und/oder formschlüssig an der Handhabungseinrichtung angebracht werden. Bevorzugt kann der Rahmen 18 mittels einer Rast-, Steck- oder Schraubverbindung an der Handhabungseinrichtung angebracht werden.

Beispielsweise kann der Rahmen 18 mindestens einen Befestigungsabschnitt 20 zum Befestigen an der Handhabungseinrichtung aufweisen. Vorzugsweise kann der mindestens einen Befestigungsabschnitt 20 an einer Außenumfangsfläche des Rahmens 18 angeordnet sein.

Bevorzugt kann der mindestens einen Befestigungsabschnitt 20 beispielsweise mindestens ein Schraubenloch für eine Schraubenverbindung mit der Handhabungseinrichtung, mindestens ein Rastelement für eine Rastverbindung mit der Handhabungseinrichtung und/oder mindestens ein Steckelement für eine Steckverbindung mit der Handhabungseinrichtung aufweisen. Bevorzugt sind mehrere Schraubenlöcher, mehrere Rastelemente und/oder mehrere Steckelemente umfasst. Beispielsweise können die mehreren Schraubenlöcher, die mehreren Rastelemente und/oder die mehreren Steckelemente an einer Außenumfangsseite des Rahmens 18 angeordnet sein, vorzugsweise äquidistant zueinander.

Es ist allerdings auch möglich, dass der Rahmen 18 selbst nicht direkt an der Handhabungseinrichtung angebracht ist. Stattdessen kann bspw. noch ein zusätzliches Element, wie bspw. ein Gehäuse oder eine Halterung den Rahmen 18 an der Handhabungseinrichtung anbringen. Das zusätzliche Element kann separat von dem Rahmen 18 ausgebildet und bspw. mittels des mindestens einen Befestigungsabschnitt 20 an dem Rahmen 18 angebracht ist. Alternativ oder zusätzlich kann das zusätzliche Element beispielsweise Integral-einstückig mit dem Rahmen 18 ausgebildet sein.

Die Verbinder 22 sind elastisch verformbar, vorzugsweise elastisch biegsam. Die Verbinder 22 verbinden die Werkzeugaufnahme 14 elastisch bewegbar mit dem Rahmen 18 verbinden. Die Werkzeugaufnahme 14 ist durch die Verbinder 22 elastisch bewegbar innerhalb des Rahmens 18.

Die Verbinder 22 können so ausgeführt sein, dass sie eine Bewegung der Werkzeugaufnahme 14 relativ zum Rahmen 18 in einem festgelegten Maß zulassen. Bei einer Krafteinwirkung auf den Greifer und somit auf die Werkzeugaufnahme 14 können die Verbinder 22 sich (lediglich) elastisch verformen. Nach einem Rückgang der Kraft können die Verbinder 22 und damit die Werkzeugaufnahme 14 wieder in ihre Ausgangslagen zurückkehren. Bevorzugt kann eine durch die Verbinder 22 bewirkte Federhärte und Rückstellkraft in die einzelnen Raumrichtungen durch eine entsprechende Dimensionierung und Auslegung der Verbinder 22 festgelegt werden.

Die elastische Verformbarkeit der Verbinder 22 kann im Wesentlichen in einer Ausrichtungsebene des Ausgleichselements 12A bzw. einer Ebene senkrecht zu einer Zentralachse (Hauptmittelachse) des Ausgleichselements 12A bestehen. Zusätzlich kann bspw. noch eine elastische Verformbarkeit der Verbinder 22 in einer Richtung senkrecht zu der Ausrichtungsebene des Ausgleichselements 12A bzw. parallel zu einer Zentralachse (Hauptmittelachse) des Ausgleichselements 12A bestehen.

Entsprechend kann die Bewegbarkeit der Werkzeugaufnahme 14 im Wesentlichen in der Ausrichtungsebene des Ausgleichselements 12A bzw. der Ebene senkrecht zu der Zentralachse des Ausgleichselements 12A bestehen und optional zusätzlich senkrecht dazu.

Vorzugsweise können die Verbinder 22 innen von dem Rahmen 18 und außen von der Werkzeugaufnahme 14 angeordnet sein. Beispielsweise können die Verbinder 22 in einem zwischen dem Rahmen 18 und der Werkzeugaufnahme 14 gebildeten Ringspalt angeordnet sein. Bevorzugt können die Verbinder 22, vorzugsweise gleichmäßig, verteilt um eine Außenumfangsfläche der Werkzeugaufnahme 14 herum angeordnet sein.

Vorzugsweise sind die Verbinder 22 als Stege (Speichen) ausgeführt. Bevorzugt können die Verbinder 22 sich gebogen, besonders bevorzugt spiralförmig gebogen, zwischen dem Rahmen 18 und der Werkzeugaufnahme 14 erstrecken. Ein Radius einer Bogenform eines jeweiligen Verbinders 22 kann kleiner sein als ein Radius des Rahmens 18 und/oder kann größer sein als ein Radius der Werkzeugaufnahme 14.

An einem Ende können die Verbinder 22 jeweils in eine Außenumfangsfläche der Werkzeugaufnahme 14 übergehen. Bevorzugt kann dieser Übergang vom jeweiligen Verbinder 22 in die Außenumfangfläche der Werkzeugaufnahme 14 tangential sein.

An einem entgegengesetzten Ende können die Verbinder 22 jeweils in eine Innenumfangsfläche des Rahmens 18 übergehen. Bevorzugt kann dieser Übergang vom jeweiligen Verbinder 22 in die Innenumfangsfläche des Rahmens 18 tangential sein.

Die Verbinder 22 können die Werkzeugaufnahme 14 und damit den darin aufgenommenen Greifer an dem Rahmen 18 abstützen.

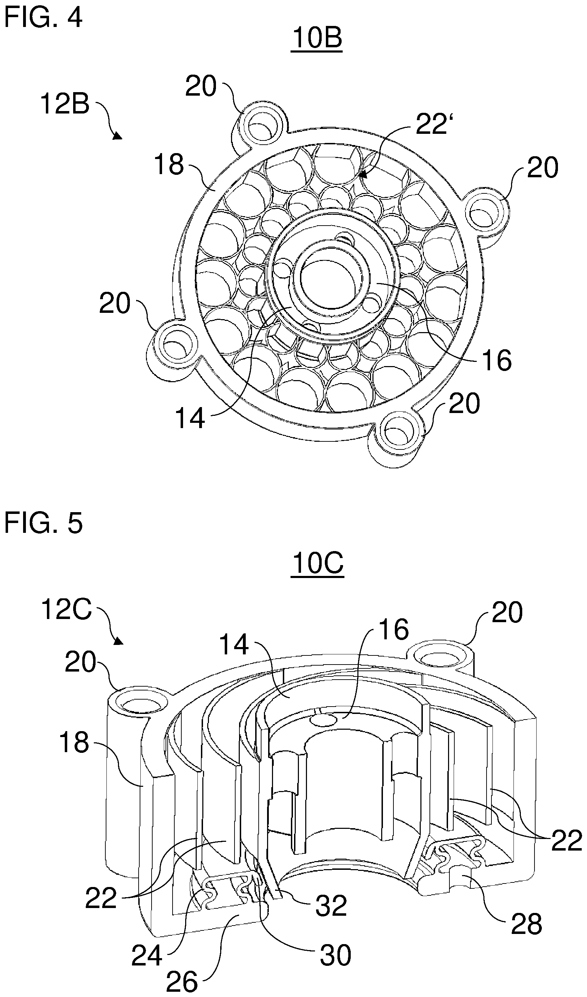

Die Figur 4 zeigt die Vorrichtung 10B mit dem Ausgleichselement 12B.

Das Ausgleichselement 12B kann ähnlich zu dem unter Bezugnahme auf die Figuren 1 bis 3 beschriebenen Ausgleichselement 12A sein. Ein Unterschied des Ausgleichselements 12B zu dem Ausgleichselement 12A kann darin bestehen, dass die Verbinder 22' des Ausgleichselements 12B im Wesentlichen ringförmig bzw. blasenförmig oder gewellt sind.

Die Verbinder 22' sind wiederum elastisch verformbar zum Bereitstellen einer elastischen Bewegbarkeit der Werkzeugaufnahme 14 innerhalb des Rahmens 18.

Die Figur 5 zeigt die Vorrichtung 10C mit dem Ausgleichselement 12C.

Das Ausgleichselement 12C kann ähnlich zu dem unter Bezugnahme auf die Figuren 1 bis 3 beschriebenen Ausgleichselement 12A sein. Ein Unterschied des Ausgleichselements 12C zu dem Ausgleichselement 12A kann darin bestehen, dass das Ausgleichselement 12C zusätzlichen einen Balg 24 aufweist.

Der Balg 24 kann die Werkzeugaufnahme 14 umgeben, bevorzugt koaxial. Bevorzugt kann der Balg 24 im Wesentlichen ringförmig sein.

Beispielsweise kann der Balg 24 kann in einem zwischen dem Rahmen 18 und der Werkzeugaufnahme 14 gebildeten Ringspalt angeordnet sein. Beispielsweise kann der Balg 24 unterhalb oder oberhalb von den Verbindern 22 angeordnet sein.

Der Balg 24 kann bspw. von einer ringförmigen Platte 26 getragen sein. Die Platte 26 kann an ihrem Außenumfang mit dem Rahmen 18 verbunden sein. Bevorzugt kann die Platte 26 an ihrem Außenumfang in eine stirnseitige Fläche des Rahmens 18 und/oder in eine Innenumfangsfläche des Rahmens 18 übergehen. Die Platte 26 kann von dem Rahmen 18 getragen sein. Die Platte 26 kann den Balg 24 tragen.

Der Balg 24 kann elastisch verformbar sein. Der Balg 24 kann zum Arretieren (Festlegen) und/oder Rückstellen der Werkzeugaufnahme 14 innerhalb des Rahmens 18 aufblasbar sein.

Beispielsweise kann sich der aufgeblasene Balg 24 an eine Außenumfangsfläche der Werkzeugaufnahme 14 anlegen. Der aufgeblasene Balg 24 kann die Werkzeugaufnahme 14 zum Einnehmen einer mittigen Position innerhalb des Rahmens 18 beaufschlagen.

Der Balg 24 kann mit einem Druckluftanschluss 28 zum Zuführen von Druckluft zu dem balg 24 verbunden sein. Es ist möglich, dass der Balg 24 ebenfalls über den Druckluftanschluss 28 entlastet werden kann.

An den Druckluftanschluss 28 kann eine Druckluftleitung anschließbar sein (nicht in den Figuren dargestellt). Über die Druckluftleitung kann der Balg 24 zum Aufblasen mit Druckluft versorgt werden. Die Druckluftleitung kann lösbar an dem Druckluftanschluss 28 angeschlossen werden. Beispielsweise kann die Druckluftleitung kraft- und/oder formschlüssig mit dem Druckluftanschluss 28 verbunden sein. Beispielsweise können der Druckluftanschluss 28 und die Druckluftleitung über eine Schraub- oder Klemmverbindung lösbar miteinander verbunden werden.

Der Druckluftanschluss 28 kann vorzugsweise direkt in den Balg 24 münden. Alternativ kann beispielsweise ein Verbindungskanal den Druckluftanschluss 28 und den Balg 24 verbinden.

Bevorzugt kann der Druckluftanschluss 28 in der Platte 26 angeordnet sein.

Der Balg 24 kann aufgrund seiner geringen Wandstärke aufblasbar sein. Beispielsweise kann eine Außenwand des Balgs 24 eine geringere Wandstärke aufweisen als der Druckluftanschluss 28 oder der optionale Verbindungskanal zwischen dem Druckluftanschluss 28 und dem Balg 24. beispielsweise kann der Balg 24 eine Wandstärke ≤ 2 mm, ≤ 1.5 mm oder ≤ 1 mm aufweisen.

Bevorzugt kann der Balg 24 an seiner Innenumfangsseite formangepasst zu einer gegenüberliegenden Außenumfangsseite der Werkzeugaufnahme 14 sein.

Beispielsweise kann der Balg 24 einen Innenkonusabschnitt 30 aufweisen. Der Innenkonusabschnitt 30 kann an einer Innenumfangsseite des Balgs 24 angeordnet sein. Der Innenkonusabschnitt 30 kann einem Außenkonusabschnitt 32 der Werkzeugaufnahme 14 direkt gegenüberliegen. Der Innenkonusabschnitt 30 kann ringförmig sein. Der Innenkonusabschnitt 30 kann bspw. als eine umlaufende Lippe ausgeführt sein. Der Außenkonusabschnitt 32 kann ebenfalls ringförmig sein. Der Außenkonusabschnitt 32 kann bspw. an einem, z. B. oberen oder unteren, Ende der rohr- oder ringförmige Werkzeugaufnahme 14 angeordnet sein.

Vorzugsweise kann bei einer Druckluftbeaufschlagung des Balgs 24 der Balg 24 aufgeblasen werden. Dadurch kann der als Rückstellkonus wirkende Innenkonusabschnitt 30, z. B. nach oben, bewegt und an den Außenkonusabschnitt 32 der Werkzeugaufnahme 14 gedrückt werden. Die dabei wirkende Kraft kann zu einer Rückstellung der Werkzeugaufnahme 14 in deren Mittelpunktlage/Nulllage, z. B. im Zentrum des Ausgleichselements 12C, und optional zu einer Arretierung in dieser Lage führen.

Besonders bevorzugt sind die Werkzeugaufnahme 14, der Rahmen 18, die mehreren Verbinder 22 und der Balg 24 sowie optional die Platte 26 integral-einstückig miteinander verbunden. Entsprechend kann das Ausgleichselement 12C wiederum einteilig sein. Die Werkzeugaufnahme 14, der Rahmen 18, die Verbinder 22 und der Balg 24 sowie optional die Platte 26 können gemeinsam einen einteiligen Körper bilden. Im Einzelnen können die Werkzeugaufnahme 14, der Rahmen 18, die Verbinder 22, der Balg 24 sowie optional die Platte 26 gemeinsam aus mehreren aneinander angrenzenden, additiv gefertigten Materialschichten gebildet sein.

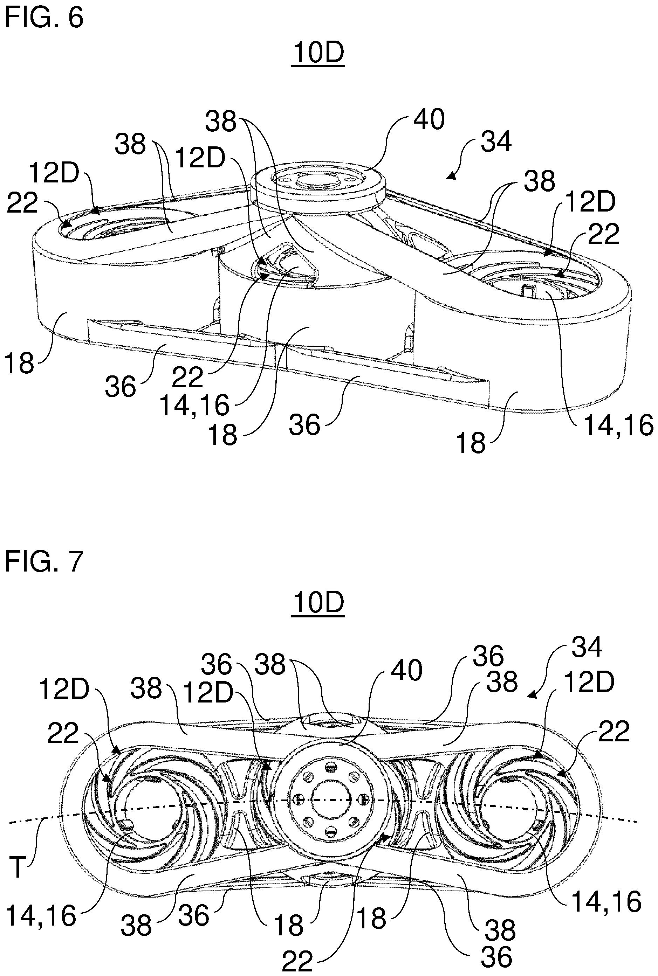

Die Figuren 6 bis 11 zeigen die Vorrichtung 10D.

Die Vorrichtung 10D weist mehrere Ausgleichselemente 12D auf, z. B. drei Ausgleichselemente 12D wie dargestellt ist.

Die Ausgleichselemente 12D können miteinander verbunden sein. Bevorzugt sind die Ausgleichselemente 12D integral-einstückig miteinander verbunden. Beispielsweise können die Ausgleichselemente 12D an den Außenumfangsflächen ihrer jeweiligen Rahmen 18 miteinander integral-einstückig verbunden sein. Die Außenumfangsflächen der Rahmen 18 können bevorzugt ineinander übergehen.

Die Ausgleichselemente 12D können nebeneinander, vorzugsweise in einer Reihe, angeordnet sein. Bevorzugt liegen die Mittelpunkte der Werkzeugaufnahmen 14 der Ausgleichselemente 12D nicht auf einer geraden Linie. Stattdessen ist bevorzugt, dass die Mittelpunkte der Werkzeugaufnahmen 14 auf einem gedachten Kreisbogen liegen (siehe Figur 7). Der Kreisbogen kann ein Teil (eine Kreislinie) eines Kreises sein, dessen Durchmesser identisch zu einem Durchmesser eines Teilkreises T einer Rundläufer-Behälterbehandlungseinrichtung, mit der die Vorrichtung 10D zu verwenden ist, ist.

Die Vorrichtung 10D kann ein Gehäuse 34 aufweisen.

Das Gehäuse 34 kann die Ausgleichselemente 12D miteinander verbinden. Bevorzugt verbindet das Gehäuse 34 die Ausgleichselemente 12D integral-einstückig miteinander. Das Gehäuse 34 und die Ausgleichselemente 12D können gemeinsam aus mehreren aneinander angrenzenden, additiv gefertigten, Materialschichten gebildet sein, vorzugsweise aus einem Kunststoff, z. B. einem thermoplastischen Polyurethan.

Bevorzugt kann das Gehäuse 34 zumindest abschnittsweise eine Raumfachwerkstruktur aufweisen. Die Ausgleichselemente 12D können über die Raumfachwerkstruktur integral-einstückig miteinander verbunden sein.

Das Gehäuse 34 kann die Ausgleichselemente 12D zumindest teilweise abdecken. Das Gehäuse 34 kann bspw. eine Oberseite bzw. eine der Handhabungseinrichtung zugewandte Seite der Ausgleichselemente 12D zumindest teilweise abdecken.

Beispielsweise kann das Gehäuse 34 mehrere Streben 36, mehrere Streben 38 und/oder einen Flanschabschnitt 40 aufweisen, die vorzugsweise integral-einstückig miteinander verbunden sein können.

Die Streben 36 können die Rahmen 18 der Ausgleichselemente 12D integral-einstückig miteinander verbinden. Beispielsweise können die Streben 36 jeweils an einem Ende in eine Außenumfangsfläche eines Rahmens 18 eines Ausgleichselements 12D übergehen, und an einem entgegengesetzten Ende in eine Außenumfangsfläche eines Rahmens 18 eines anderen Ausgleichselements 12D übergehen. Bevorzugt können die Übergänge jeweils tangential erfolgen. Bevorzugt können die Streben 36 im Wesentlichen parallel zu einer Ausrichtungsebene der Ausgleichselemente 12D sein.

Die Streben 38 können die Rahmen 18 der Ausgleichselemente 12D mit dem Flanschabschnitt 40 integral-einstückig verbinden. Beispielsweise können die Streben 38 an einer Oberseite bzw. einer der Handhabungseinrichtung zugewandten Seite der Ausgleichselemente 12D angeordnet sein. Beispielsweise können die Streben 38 jeweils an einem Ende in eine Stirnfläche und/oder Außenumfangsfläche eines Rahmens 18 eines Ausgleichselements 12D übergehen, und an einem entgegengesetzten Ende in den Flanschabschnitt 40 übergehen. Bevorzugt können die Streben 38 angewinkelt zu einer Ausrichtungsebene der Ausgleichselemente 12D sein.

Der Flanschabschnitt 40 kann mittig bezüglich einer Längserstreckung der Vorrichtung 10D angeordnet sein. Beispielsweise kann der Flanschabschnitt 40 ausgerichtet mit einem mittig angeordneten Ausgleichselement 12D der mehreren Ausgleichselemente 12D angeordnet sein. Bevorzugt ist der Flanschabschnitt 40 beabstandet zu den Ausgleichselementen 12D angeordnet und mit diesen über die Streben 38 verbunden.

Mittels des Flanschabschnitts 40 kann die Vorrichtung 10D an der Handhabungseinrichtung angebracht werden, z. B. als ein Endeffektor. Bevorzugt kann der Flanschabschnitt 40 beispielsweise mindestens ein Schraubenloch für eine Schraubenverbindung mit der Handhabungseinrichtung, mindestens ein Rastelement für eine Rastverbindung mit der Handhabungseinrichtung und/oder mindestens ein Steckelement für eine Steckverbindung mit der Handhabungseinrichtung aufweisen. Bevorzugt sind mehrere Schraubenlöcher, mehrere Rastelemente und/oder mehrere Steckelemente umfasst. Beispielsweise können die mehreren Schraubenlöcher, die mehreren Rastelemente und/oder die mehreren Steckelemente an einer Stirnseite des Flanschabschnitts 40 angeordnet sein, vorzugsweise äquidistant zueinander auf einer gedachten Kreislinie.

Bevorzugt kann der Flanschabschnitt 40 im Wesentlichen scheibenförmig sein.

Die Figuren 8 bis 10 zeigen die mit mehreren Greifern 42 ausgestattete Vorrichtung 10D. Für eine bessere Übersichtlichkeit sind in den Figuren 8 bis 10 einige Bezugszeichen weggelassen.

Die Greifer 42 sind vorzugsweise als Lochgreifer ausgeführt. Der Lochgreifer kann auch als ein Expansionsgreifer, ein Balggreifer oder ein Innengreifer bezeichnet werden.

Mit dem Lochgreifer kann ein Gegenstand (z. B. Werkstück oder Behälter), z. B. ein Behälterdrehteller, ein Formatteil, ein Garniturteil oder ein Behälter, gegriffen und gehandhabt werden. Der Lochgreifer kann den Gegenstand in bzw. an einem Loch des Gegenstands greifen. Der Lochgreifer kann sich in dem Loch form- und kraftschlüssig festklemmen. Der festgeklemmte Gegenstand kann zusammen mit dem Lochgreifer von der Handhabungseinrichtung bewegt werden.

Der Lochgreifer kann bspw. mit einem aufblasbaren Balg versehen sein. Hier kann innen ein Überdruck angelegt werden, wodurch sich der Balg ballonartig aufblasen kann. Der Balg kann sich an eine Lochinnenwand anlegen und somit einen reibschlüssigen Kontakt mit dem zu transportierenden Gegenstand herstellen. Alternativ kann der Lochgreifer bspw. ein elastisch verformbares Element aufweisen. Hier kann durch einen pneumatischen Antrieb ein Stößel gezogen oder gedrückt werden. Der Stößel kann das elastisch verformbare Element stauchen. Durch diese Stauchung kann ebenfalls ein reibschlüssiger Kontakt zur Lochinnenwand hergestellt werden.

Bevorzugt ist der mindestens eine Greifer 42 lösbar an dem Befestigungsabschnitt 16 der Werkzeugaufnahme 14 des mindestens einen Ausgleichselements 12D befestigt, z. B. je ein Greifer 42 je Werkzeugaufnahme 14.

Alternativ ist es jedoch bspw. auch möglich, dass der mindestens eine Greifer 42 und die Werkzeugaufnahme 14 des mindestens einen Ausgleichselements 12D integral-einstückig miteinander verbunden sind. Beispielsweise können der mindestens eine Greifer 42 und das mindestens eine Ausgleichselement 12D gemeinsam aus mehreren aneinander angrenzenden, vorzugsweise additiv gefertigten, Materialschichten gebildet sein, vorzugsweise aus einem Kunststoff, z. B. einem thermoplastischen Polyurethan.

Wie beispielhaft anhand der Vorrichtung 10D in den Figuren 8 bis 10 dargestellt ist, kann mindestens ein mechanischer Anschlag 44 je Ausgleichselement 12D umfasst sein.

Der mindestens eine mechanische Anschlag 44 kann eine elastische Bewegbarkeit der Werkzeugaufnahme 14 innerhalb des Rahmens 18 begrenzen. Hierzu kann der mindestens eine mechanische Anschlag 44 vorzugsweise außen an den Rahmen 18 anschlagen.

Bevorzugt kann der mindestens eine mechanischen Anschlag 44 den Rahmen 18 mit einem Spalt zwischen dem mindestens einen mechanischen Anschlag 44 und dem Rahmen 18 umgreifen. Entsprechend einer Dimensionierung des Spalts kann die elastische Bewegbarkeit der Werkzeugaufnahme 14 innerhalb des Rahmens 18 begrenzt werden.

Vorzugsweise kann der mindestens eine mechanische Anschlag 44 als ein erhabener Rand einer von der Werkzeugaufnahme 14 ausgehenden Platte 46 ausgeführt sein. Die Platte 46 kann vorzugsweise scheibenförmig oder ringförmig sein. Die Platte 46 kann lösbar oder integral-einstückig mit dem jeweiligen Ausgleichselement 12D, dem Gehäuse 34 oder dem Greifer 42 verbunden sein. Der Rand kann gebogen sein, bevorzugt formangepasst an eine Außenumfangsfläche des Rahmens 18.

Beispielsweise kann der mindestens eine mechanische Anschlag 44 sich mit der Werkzeugaufnahme 14 des jeweiligen Ausgleichselements 12 mitbewegen, während sich die Werkzeugaufnahme 14 innerhalb des Rahmens 18 bewegt. Der mindestens eine mechanische Anschlag 44 kann sich so lange mitbewegen, bis er an dem Rahmen 18, z. B. außen, anschlägt und damit die elastische Bewegbarkeit der Werkzeugaufnahme 14 und damit des Greifers 42 begrenzt.

Der mindestens eine mechanische Anschlag 44 kann lösbar mit dem mindestens einen Ausgleichselement 12D verbunden sein. Bspw. kann der mindestens eine mechanische Anschlag 44 verbunden über die Platte 46 mit der Werkzeugaufnahme 14 und/oder dem in der Werkzeugaufnahme 14 aufgenommenen Greifer 42 lösbar verbunden sein.

Alternativ ist es jedoch bspw. auch möglich, dass der mindestens eine mechanischen Anschlag 44 und das mindestens eine Ausgleichselement 12D integral-einstückig miteinander verbunden sind, z. B. über die Platte 46 und/oder die Werkzeugaufnahme 14. Beispielsweise können der mindestens eine mechanischen Anschlag 44 und das mindestens eine Ausgleichselement 12D gemeinsam aus mehreren aneinander angrenzenden, vorzugsweise additiv gefertigten, Materialschichten gebildet sein, vorzugsweise aus einem Kunststoff, z. B. einem thermoplastischen Polyurethan.

Bevorzugt sind mehrere mechanische Anschläge 44 je Ausgleichselement 12D umfasst. Beispielsweise können die mehreren mechanischen Anschläge 44 je Ausgleichselement 12D verteilt um eine Außenumfangsfläche des Rahmens 18 herum angeordnet sein.

Wie ebenfalls beispielhaft anhand der Vorrichtung 10D in den Figuren 8 bis 10 dargestellt ist, können mehrere Abstandhalter 48 umfasst sein.

Die Abstandhalter 48 können vorzugsweise stabförmig sein. Mittels der Abstandhalter 48 kann der von dem jeweiligen Greifer 42 gegriffene Gegenstand wie gewünscht ausgerichtet positioniert werden. Dazu können die freien Enden der Abstandhalter 48 den Gegenstand kontaktieren, z. B. eine Oberseite des Gegenstands.

Die Abstandhalter 48 können sich hin zu dem zu greifenden Gegenstand bzw. parallel zu einer Mittelachse des jeweiligen Greifers 42 erstrecken.

Die Abstandhalter 48 können bspw. an der Platte 46, dem Gehäuse 34, dem Ausgleichselement 12D und/oder dem Greifer 42 angeordnet sein. Es ist möglich, dass die Abstandhalter 48 integral-einstückig mit dem mindestens einen Ausgleichselement 12D verbunden sind.

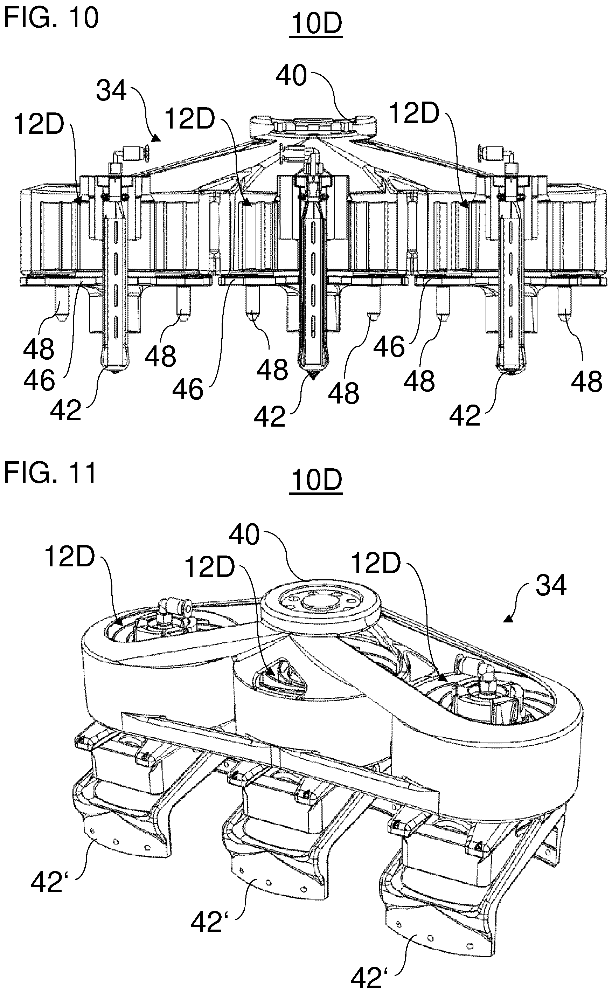

Die Figur 11 zeigt die mit mehreren Greifern 42' ausgestattete Vorrichtung 10D. Für eine bessere Übersichtlichkeit sind in der Figur 11 einige Bezugszeichen weggelassen.

Die Greifer 42' aus Figur 11 können als sogenannte Außengreifern, bevorzugt Parallelgreifer, ausgeführt sein.

Der Parallelgreifer kann bspw. zwei Greifbacken aufweisen. Die zwei Greifbacken können bei Betätigung hin zueinander zum Greifen eines Gegenstands bewegt werden. Die zwei Greifbacken können zum Freigeben des gegriffenen Gegenstands weg voneinander bewegt werden.

Es versteht sich, dass die einzelnen Merkmale der Vorrichtungen 10A, 10B, 10C und 10D beliebig miteinander kombinierbar und untereinander austauschbar sind.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration des Ausgleichselements, der Werkzeugaufnahme, des Rahmens und/oder der Verbinder des unabhängigen Anspruchs 1 offenbart. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10A-10D: Vorrichtung
- 12A-12D: Ausgleichselement
- 14: Werkzeugaufnahme
- 16: Befestigungsabschnitt
- 18: Rahmen
- 20: Befestigungsabschnitt
- 22: Verbinder
- 24: Balg
- 26: Platte
- 28: Druckluftanschluss
- 30: Innenkonusabschnitt
- 32: Außenkonusabschnitt
- 34: Gehäuse
- 36: Strebe
- 38: Strebe
- 40: Flanschabschnitt
- 42: Greifer
- 44: mechanischer Anschlag
- 46: Platte
- 48: Abstandhalter

- T: Teilkreis

## Patentansprüche

1. Vorrichtung (10A-10D) zum Verbinden eines Greifers (42) mit einer Handhabungseinrichtung, vorzugsweise Handhabungsroboter, wobei die Vorrichtung (10A-10D) aufweist:
mindestens ein, vorzugsweise im Wesentlichen scheibenförmiges, Ausgleichselement (12A-12D) zum Ausgleichen von Positionsungenauigkeiten, mit:
- einer, vorzugsweise ringförmigen oder rohrförmigen, Werkzeugaufnahme (14) zum Aufnehmen des Greifers (42),
- einem, vorzugsweise ringförmigen, Rahmen (18) zum Verbinden des Ausgleichselements (12A-12D) mit der Handhabungseinrichtung, wobei der Rahmen (18) die Werkzeugaufnahme (14) rahmenförmig, und vorzugsweise koaxial, umgibt,
- mehreren elastisch verformbaren Verbindern (22), die die Werkzeugaufnahme (14) elastisch bewegbar innerhalb des Rahmens (18) mit dem Rahmen (18) verbinden,
wobei die Werkzeugaufnahme (14), der Rahmen (18) und die mehreren Verbinder (22) integral-einstückig miteinander verbunden sind.

2. Vorrichtung (10A-10D) nach Anspruch 1, wobei:
das mindestens eine Ausgleichselement (12A-12D) aus mehreren aneinander angrenzenden, vorzugsweise additiv gefertigten, Materialschichten gebildet ist, vorzugsweise aus einem Kunststoff, z. B. einem thermoplastischen Polyurethan, einem Polyamid oder anderen Materialien.

3. Vorrichtung (10A-10D) nach Anspruch 1 oder Anspruch 2, wobei:
die Verbinder (22) als Stege ausgeführt sind und die Stege sich gebogen, bevorzugt spiralförmig gebogen, zwischen dem Rahmen (18) und der Werkzeugaufnahme (14) erstrecken, oder
die Verbinder (22') ringförmig, blasenförmig oder gewellt sind.

4. Vorrichtung (10A-10D) nach einem der vorherigen Ansprüche, wobei:
die Verbinder (22) jeweils einerseits in eine Außenumfangsfläche der Werkzeugaufnahme (14) und andererseits in eine Innenumfangsfläche des Rahmens (18) übergehen.

5. Vorrichtung (10D) nach einem der vorherigen Ansprüche, wobei:
das mindestens eine Ausgleichselement (12D) mehrere, vorzugsweise zwei oder drei, Ausgleichselemente (12D) aufweist, die miteinander verbunden sind, vorzugsweise integral-einstückig.

6. Vorrichtung (10D) nach Anspruch 5, wobei:
die Werkzeugaufnahmen (14) der mehreren Ausgleichselemente (12D) jeweils einen Mittelpunkt aufweisen, und
die Mittelpunkte auf einem gedachten Kreisbogen liegen.

7. Vorrichtung (10D) nach Anspruch 5 oder Anspruch 6, ferner aufweisend:
ein Gehäuse (34), das die mehreren Ausgleichselemente (12D) miteinander, vorzugsweise mittels mehrerer Streben (36, 38), verbindet, wobei das Gehäuse (34) einen Flanschabschnitt (40) zum Anbringen der Vorrichtung (10D) an die Handhabungseinrichtung aufweist.

8. Vorrichtung (10D) nach Anspruch 7, wobei:
das Gehäuse (34) integral-einstückig mit den mehreren Ausgleichselementen (12D) verbunden ist; und/oder
die mehreren Ausgleichselemente (12D) und das Gehäuse (34) gemeinsam aus mehreren aneinander angrenzenden, vorzugsweise additiv gefertigten, Materialschichten gebildet sind, vorzugsweise aus einem Kunststoff, z. B. einem thermoplastischen Polyurethan, einem Polyamid oder anderen Materialien.

9. Vorrichtung (10D) nach einem der vorherigen Ansprüche, ferner aufweisend:
mindestens einen mechanischen Anschlag (44), der eine elastische Bewegbarkeit der Werkzeugaufnahme (14) innerhalb des Rahmens (18) begrenzt.

10. Vorrichtung (10D) nach Anspruch 9, wobei mindestens eines erfüllt ist von:
der mindestens eine mechanische Anschlag (44) ist lösbar oder integral-einstückig mit dem mindestens einen Ausgleichselement (12D), vorzugsweise der Werkzeugaufnahme (14) des mindestens einen Ausgleichselements (12D), verbunden;
der mindestens eine mechanische Anschlag (44) ist mit der Werkzeugaufnahme (14) zum Mitbewegen mit der Werkzeugaufnahme (14) verbunden;
der mindestens eine mechanische Anschlag (44) umgreift den Rahmen (18) mit einem Spalt zwischen dem mindestens einen mechanischen Anschlag (44) und dem Rahmen (18); und
der mindestens eine mechanische Anschlag (44) ist als ein erhabener, vorzugsweise gebogener, Rand einer von der Werkzeugaufnahme (14) ausgehenden Platte (46) ausgeführt, der zum Begrenzen der elastischen Bewegbarkeit an den Rahmen (18) anschlägt.

11. Vorrichtung (10C) nach einem der vorherigen Ansprüche, wobei:
das mindestens eine Ausgleichselement (12C) ferner einen elastisch verformbaren Balg (24) aufweist, der die Werkzeugaufnahme (14), vorzugsweise koaxial, umgibt und zum Rückstellen und/oder Arretieren der Werkzeugaufnahme (14) aufblasbar ist, und optional:
- die Werkzeugaufnahme (14), der Rahmen (18), die mehreren Verbinder (22) und der elastisch verformbare Balg (24) integral-einstückig miteinander verbunden sind; und/oder
- der elastisch verformbare Balg (24) einen Innenkonusabschnitt (30) aufweist, der einem Außenkonusabschnitt (32) der Werkzeugaufnahme (14) gegenüberliegt.

12. Vorrichtung (10A-10D) nach einem der vorherigen Ansprüche, ferner aufweisend:
mindestens einen Greifer (42), bevorzugt Lochgreifer oder Außengreifer, der in der Werkzeugaufnahme (14) des mindestens einen Ausgleichselements (12A-12D), vorzugsweise lösbar oder integral-einstückig, aufgenommen ist; und/oder
mehrere, vorzugsweise stabförmige, Abstandhalter (48) zum ausgerichteten Positionieren eines von dem mindestens einen Greifer (42) gehaltenen Gegenstands.

13. Behälterbehandlungsanlage aufweisend:
eine Behälterbehandlungseinrichtung, vorzugsweise eine Rundläufer-Behälterbehandlungseinrichtung; und
eine Handhabungseinrichtung mit einer Vorrichtung (10A-10D) nach einem der vorherigen Ansprüche, wobei die Handhabungseinrichtung zum Handhaben von Behältern oder Bauteilen, vorzugsweise Behälterdrehtellern, Formatteilen oder Garniturteilen, der Behälterbehandlungseinrichtung ausgebildet ist.

14. Verfahren zum Herstellen einer Vorrichtung nach einem der Ansprüche 1 bis 12, aufweisend:
Additives Fertigen des mindestens einen Ausgleichselements (12A-12D), und optional des Gehäuses (34), des mindestens einen mechanischen Anschlags (44) und/oder des mindestens einen Greifers (42), zu einem einteiligen Körper, vorzugsweise in einem Pulverbettverfahren und/oder aus einem Kunststoff, bevorzugt einem thermoplastischen Polyurethan, einem Polyamid oder anderen Materialien.

15. Computerprogrammprodukt aufweisend Anweisungen, die eine additive Fertigungsvorrichtung veranlassen:
eine Vorrichtung (10A-10D) nach einem der Ansprüche 1 bis 12 in einer Vielzahl von Schichten in einem additiven Fertigungsverfahren, vorzugsweise Pulverbettverfahren, herzustellen; oder
ein Verfahren nach Anspruch 14 durchzuführen.
